# EUROPÄISCHE PATENTSCHRIFT

(11) **EP 3 320 202 B1**
(45) Veröffentlichungstag und Bekanntmachung des Hinweises auf die Patenterteilung: **04.08.2021**
(21) Anmeldenummer: 16726315.1
(22) Anmeldetag: 01.06.2016
(51) Int. Cl.: F02M 26/70, F16K 1/20, F16K 11/052, F02D 9/10

(54) **DREI-WEGE-ABGASRÜCKFÜHRUNGS-VENTILANORDNUNG MIT DREI FLUIDÖFFNUNGEN FÜR EINE ABGASRÜCKFÜHRUNG**
THREE WAY EXHAUST GAS RECIRCULATION VALVE
VANNE TROIS VOIES POUR UNE LIGNE DE RECIRCULATION DES GAZ D'ÉCHAPPEMENT DE VÉHICULE AUTOMOBILE

(30) Priorität: 07.07.2015 DE 102015110984
(43) Veröffentlichungstag der Anmeldung: 16.05.2018
(73) Patentinhaber: Pierburg GmbH, 41460 Neuss (DE)
(72) Erfinder: SUTTY, Patrick, 40477 Düsseldorf (DE); FASSBENDER, Ulrich, 41189 Mönchengladbach (DE); PAFFRATH, Holger, 50259 Pulheim (DE); VIERKOTTEN, Dirk, 53804 Much (DE); REIMERS, Thorsten, 41472 Neuss (DE)
(74) Vertreter: terpatent Patentanwälte ter Smitten Eberlein-Van Hoof Rütten Daubert
(86) Internationale Anmeldenummer: PCT/EP2016/062373
(87) Internationale Veröffentlichungsnummer: WO 2017/005416

(56) Entgegenhaltungen:
- WO-A1-01/59279
- FR-A1- 2 917 801
- US-A1- 2003 192 606
- US-A1- 2011 265 466
- US-A1- 2015 034 192

## Beschreibung

Die Erfindung betrifft eine Drei-Wege-Abgasrückführungs-Ventilanordnung mit drei Fluidöffnungen für eine Abgasrückführung einer Verbrennungskraftmaschine.

Derartige Ventilanordnungen zur Abgasrückführung sind bekannt und dienen zur Regelung einer In die Verbrennungsräume eines Verbrennungsmotors aus dem Abgastrakt zurückgeführten Abgasmenge zur Reduzierung der Schadstoffemissionen. Die Drei-Wege-Ventilanordnung weist drei Fluidöffnungen bzw. -anschlüsse auf, so dass eine differenzierte Regelung mit einer einzigen Ventilanordnung möglich ist. Eine solche Ventilanordnung wird üblicherweise auf der Niederdruckseite des Abgasstranges, d.h. nach dem Abgasturbolader eingesetzt. Innerhalb dieser Niederdruckseite kann die Ventilanordnung sowohl auf einer heißen als auch auf einer kalten Seite eingesetzt werden. Die heiße Seite liegt in Strömungsrichtung des Abgases vor einem Abgaskühler, die kalte Seite dahinter.

Aus dem Stand der Technik sind Ventilanordnungen bekannt, bei welchen durch Öffnen einer Klappe Abgas dem Motor zurückgeführt wird. Eine derartige Ventilanordnung ist beispielsweise bekannt aus FR 2 917 801 A1.

Durch Einstellung des Öffnungswinkels und in Abhängigkeit von der anliegenden Druckdifferenz ist die Abgasmenge, welche dem Verbrennungsmotor zurückgeführt wird, einstellbar. Im Motor-Volllastbereich, in welchem lediglich geringe Mengen an Abgas dem Motor zurückgeführt werden sollen, liegen jedoch hohe Druckdifferenzen an der Klappe an, wodurch bereits kleine Öffnungswinkeländerungen zu hohen Abgasmengenänderungen führen. Dadurch ist eine feine Einstellung der rückgeführten Abgasmenge insbesondere erschwert.

Aus US 2011/0265466 A1 ist eine Registerklappe bekannt, die eine Großmengenklappe und eine Kleinmengenklappe aufweist, sodass der Gasstrom insbesondere bei relativ geringen Soll-Gasströmen genauer eingestellt werden kann.

Die Aufgabe der vorliegenden Erfindung liegt somit darin eine verbesserte Drei-Wege-Abgasrückführungs-Ventilanordnung zu schaffen, welche eine feine Einstellung der Abgasmenge insbesondere im Volllastbereich ermöglicht.

Die der Erfindung zugrunde liegende Aufgabe wird gelöst durch eine Drei-Wege-Ventilanordnung nach dem unabhängigen Anspruch 1.

Als Drei-Wege-Ventil im Sinne der vorliegenden Erfindung wird dabei eine Ventilanordnung mit drei Anschlüssen verstanden, welche durch Öffnen der Klappe eine zusätzliche Einlass-Auslass-Verbindung herstellt. Anspruch 1 spezifiziert eine Registerklappe, die eine Kleinmengenklappe, eine Großmengenklappe und einen Mitnehmer aufweist. Die Kleinmengenklappe weist dabei einen Schließkörper auf, mit welchem eine in der Großmengenklappe vorgesehene Kleinmengenöffnung verschließbar ist. Als Registerklappe nach der vorliegenden Erfindung wird eine Klappe verstanden, welche durch Öffnen verschiedener Klappenelemente unterschiedlich große Öffnungen freigeben kann. Die Kleinmengenklappe liegt bei geschlossener Großmengenklappe innerhalb der Großmengenöffnung, so dass die Kleinmengenöffnung eine kleinere Öffnungsfläche als die Großmengenöffnung hat. Die Kleinmengenklappe verschließt die Kleinmengenöffnung und die Großmengenklappe verschließt die Großmengenöffnung. In einem vollständig geschlossenen Zustand ist somit einer der drei Anschlüsse der Ventilanordnung fluidisch von den beiden anderen Anschlüssen getrennt. Der Mitnehmer ist derart ausgebildet, dass der Öffnungsgrad der Großmengenklappe im Verhältnis zur Kleinmengenklappe begrenzt ist. Ab einem definierten Öffnungsgrad der Kleinmengenklappe wird durch den Mitnehmer die Großmengenklappe bei einer weiteren Öffnungsbewegung der Klappenwelle mit verschwenkt. Dadurch wird es möglich, den maximalen Öffnungswinkel der Kleinmengenklappe zur Großmengenklappe zu begrenzen.

Da die Kleinmengenklappe eine kleinere Öffnung verschließt als die Großmengenklappe, führen kleine Öffnungswinkeländerungen der Kleinmengenklappe auch zu kleineren Abgasmengenänderungen, verglichen mit gleichen Öffnungswinkeländerungen der Großmengenklappe. Die Abgasmenge kann somit in einem Bereich, in welchem lediglich geringe zurückgeführte Abgasmengen benötigt werden, erheblich feiner eingestellt werden. Somit ist es möglich, auch unter Volllast die zurückgeführte Abgasmenge feiner zu dosieren.

In einer bevorzugten Ausgestaltung der Erfindung ist bei vollständig geöffneter Stellung der Kleinmengenklappe die zweite Öffnung mindestens drosselnd durch die Kleinmengenklappe versperrt. Als vollständig geöffnet im Sinne der Erfindung wird eine Stellung verstanden, bei der die Großmengenöffnung freigegeben ist und der Verschwenkwinkel der Klappenwelle den maximal definierten Wert aufweist. Drosselnd im Sinne der Erfindung wird der Effekt bezeichnet, bei der das Fluid durch die Kleinmengenklappe an der zweiten Öffnung aufgestaut wird. Ein Teil des Fluides kann somit weiterhin die zweite Öffnung passieren. Durch die Drosselung des Fluides an der zweiten Öffnung wird eine wirksamere Rückführung des Abgases zum Verbrennungsmotor gewährleistet.

Vorzugsweise ist bei der vollständig geöffneten Stellung der Kleinmengenklappe ein Abstand zwischen der Kleinmengenklappe und einem Rand der zweiten Öffnung höchstens 15 mm und besonders bevorzugt höchstens 10 mm. Der Abstand ist dabei gemessen an einer Stelle des Öffnungsrandes der zweiten Öffnung, bei welcher der sich senkrecht zu einer Öffnungsebene der zweiten Öffnung ergebende Abstand zu der Kleinmengenklappe maximal ist.

Gemäß einer bevorzugten Ausgestaltung der vorliegenden Erfindung ist der Mitnehmer an der Großmengenklappe vorgesehen. Vorzugsweise ist der Mitnehmer dabei einteilig mit der Großmengenklappe ausgebildet. Es sind jedoch auch Ausgestaltungen des Mitnehmers möglich, bei welcher dieser als separates Teil mittels beispielsweise einer Schraub- oder Nietverbindung mit der Großmengenklappe verbunden wird. In einer bevorzugten Ausgestaltung ist der Mitnehmer in einer Z-Form ausgebildet, wobei ein Ende des Z-förmigen Mitnehmers mit der Großmengenklappe verbunden ist und das andere Ende durch eine Öffnung in der Kleinmengenklappe hindurch tritt und die Kleinmengenklappe hintergreift.

Gemäß einer weiteren bevorzugten Ausgestaltung der vorliegenden Erfindung ist der Mitnehmer alternativ an der Kleinmengenklappe vorgesehen. Auch bei dieser Ausgestaltung, kann der Mitnehmer sowohl einteilig mit der Kleinmengenklappe ausgebildet sein, als auch separat vorliegen.

In einem bevorzugten Ausführungsbeispiel ist die Großmengenklappe einseitig an der Klappenwelle angeschlagen. Einseitig angeschlagen bedeutet hierbei, dass die Großmengenklappe um eine randseitige Drehachse, welche einem Rand der Großmengenklappe zugeordnet ist, verschwenkbar ist. Dies hat den Vorteil, dass die Drehachse außerhalb des Fluidstromes positioniert werden kann, so dass der Fluidstrom durch die Drehachse nicht gedrosselt wird.

In einem weiteren bevorzugten Ausführungsbeispiel bildet die Kleinmengenöffnung einen Ventilsitz für den Schließkörper. Dieser Ventilsitz ist dabei an die Form des Schließkörpers angepasst, um einen passgenauen Sitz des Schließkörpers in der Schließstellung zu gewährleisten und somit die Dichtigkeit weiter zu verbessern.

Vorzugsweise ist der Ventilsitzsitz integral mit der Großmengenklappe ausgebildet. Dadurch wird eine Anzahl an Teilen der Ventilanordnung reduziert. Zusätzlich ist eine Befestigung des Ventilsitzes mit der Großmengenklappe nicht notwendig, wodurch ein Herstellungsschritt eingespart wird und dadurch die Ventilanordnung wirtschaftlicher herstellbar ist.

In einer alternativen Ausführungsform wird der Ventilsitz von einem separaten Teil gebildet, welches mit der Großmengenklappe verbunden ist. Dadurch kann die Großmengenklappe aus einem anderen Werkstoff hergestellt werden, als der Ventilsitz, so dass durch Auswahl eines verschleißarmen Werkstoffes der Verschleiß des Ventilsitzes gering gehalten werden kann. Dadurch kann die Lebensdauer der Großmengenklappe verlängert werden. Demgegenüber kann der Großmengenklappenkörper aus einem preiswerten Material hergestellt werden. Damit ist eine wirtschaftliche Herstellung der Großmengenklappe möglich.

In einer weiteren bevorzugten Ausgestaltung der Erfindung ist der Schließkörper als Ventilkegel ausgebildet, welcher mit einem entsprechend geformten Ventilsitz zusammenwirkt. Ein Ventilkegel hat dabei den Vorteil, dass eine hohe Dichtigkeit der Kleinmengenöffnung gewährleistet ist.

Gemäß einer weiteren bevorzugten Ausgestaltung der vorliegenden Erfindung ist das Verbindungselement, das die Großmengenklappe mit der Kleinmengenklappe verbindet in Form einer Feder ausgebildet. Die Feder verspannt dabei die Kleinmengenklappe zu der Großmengenklappe, so dass der Schließkörper von der Kleinmengenöffnung abgehoben wird und beide Klappen bis zu dem durch den Mitnehmer vorgegebenen maximalen Öffnungswinkel zwischen Kleinmengenklappe und Großmengenklappe auseinander gedrückt werden.

In einer bevorzugten Ausführungsform wird die Feder durch eine Blattfeder gebildet. Eine Blattfeder hat den Vorteil, dass sie preiswert herstellbar ist. Diese Blattfeder wird vorzugsweise aus einem metallischen Werkstoff wie z.B. Inconel gefertigt. Statt einer Blattfeder ist alternativ ebenso eine Spiralfeder denkbar.

Vorzugsweise ist die Klappenwelle über einen Elektromotor angetrieben. Es sind jedoch jegliche dem Fachmann bekannte Antriebsmöglichkeiten denkbar.

Weitere Einzelheiten und Vorteile der vorliegenden Erfindung ergeben sich aus der nachfolgenden Beschreibung des Ausführungsbeispiels in Verbindung mit den Zeichnungen. In diesen zeigen:
Figur 1: Eine Explosionszeichnung eines Ausführungsbeispiels der Registerklappe,
Figur 2: Ventilanordnung, bei welcher die Registerklappe in einer Schließstellung steht,
Figur 3: Ventilanordnung, bei welcher die Registerklappe in einer Kleinmengenöffnungsstellung steht, und
Figur 4: Ventilanordnung, bei welcher die Registerklappe in einer Großmengenöffnungsstellung steht.

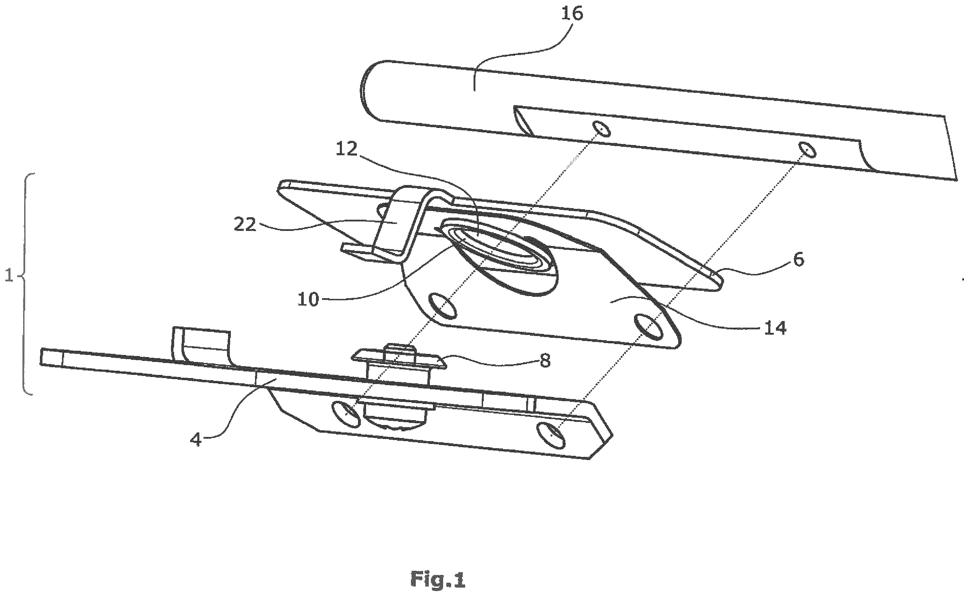

Figur 1 zeigt eine Registerklappe 1 für eine Drei-Wege-Abgasrückführungs-Ventilanordnung 2. Die Registerklappe 1 ist gebildet aus einer Kleinmengenklappe 4 und einer Großmengenklappe 6. Kleinmengenklappe 4 bildet dabei einen Ventilkegel 8 aus, welcher in einer Schließstellung mit einem Ventilsitz 10 zusammenwirkt und eine durch den Ventilsitz 10 gebildete Kleinmengenöffnung 12 dichtend verschließt. An der Großmengenklappe 6 ist eine Blattfeder 14 vorgesehen, über welche die Großmengenklappe 6 mit der Kleinmengenklappe 4 verbunden und zusammen mit dieser verschwenkbar an einer Klappenwelle 16 befestigt ist.

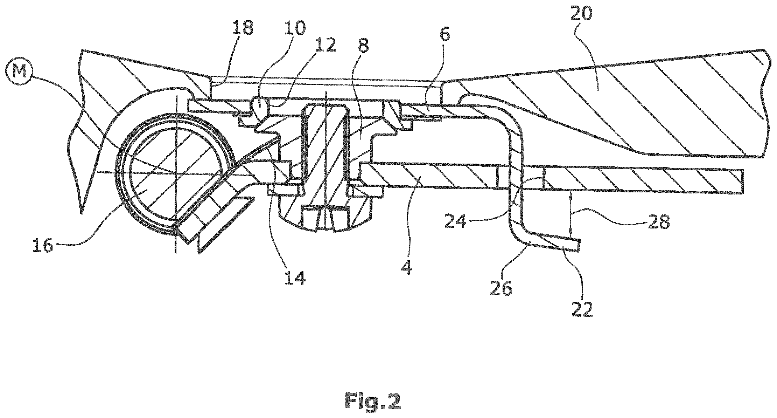

Figur 2 zeigt die Drei-Wege-Abgasrückführungs-Ventilanordnung 2 in einer Schließposition. In der Schließposition wirkt der Ventilkegel 8 mit dem Ventilsitz 10 zusammen. In dieser Position liegt die Großmengenklappe 6 an einer durch die Großmengenöffnung 18 gebildeten ersten Fluidöffnung an, welche durch ein Ventilgehäuse 20 der Ventilanordnung gebildet ist. In Figur 2 ist zudem zu erkennen, dass die Großmengenöffnung 18 größer als die Kleinmengenöffnung 12 ist. Das Ausführungsbeispiel weist zudem einen Z-förmigen Mitnehmer 22 auf, welcher einteilig mit der Großmengenklappe 6 verbunden ist. Dieser Mitnehmer 22 durchragt eine Mitnehmeröffnung 24, welche in der Kleinmengenklappe 4 vorgesehen ist. Ein endseitiger Schenkel 26 des Z-förmigen Mitnehmers 22 hintergreift dabei die Kleinmengenklappe 4 und hat eine Länge die größer als die Mitnehmeröffnung 24 ist, damit der endseitige Schenkel 26 nicht durch die Mitnehmeröffnung 24 tritt. In der Schließposition ist zwischen dem Schenkel 26 und der Kleinmengenplatte 4 ein Spalt 28. Dieser Spalt 28 definiert den maximalen Öffnungswinkel zwischen der Großmengenklappe 6 und der Kleinmengenklappe 4.

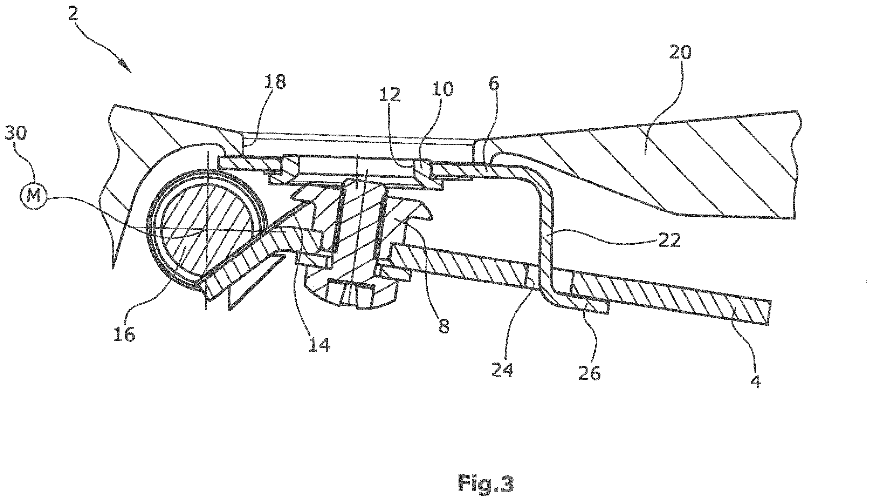

In Figur 3 ist eine Kleinmengenöffnungsstellung gezeigt. Für diese Stellung wird die Klappenwelle 16 mittels eines Elektromotors 30 innerhalb eines definierten Winkelbereiches verschwenkt, so dass die fest mit der Klappenwelle 16 verbundene Kleinmengenklappe 4 den Ventilkegel 8 aus dem Sitz 10 hebt und die Kleinmengenöffnung 12 freigegeben wird. Dadurch wird die Abgasrückführung freigegeben. In Abhängigkeit von dem Verdrehwinkel der Klappenwelle 16 kann die Kleinmengenöffnung 12 mehr oder weniger geöffnet werden, so dass eine Feineinstellung der Abgasrückführmenge möglich ist. Figur 3 zeigt einen maximal möglichen Verdrehwinkel von der Klappenwelle 16 für eine Kleinmengenregelung. In dieser Position ist kein Spalt 28 zwischen dem Schenkel 26 und der Kleinmengenplatte 4 vorhanden, und der Mitnehmer 22 ist in Kontakt mit der Kleinmengenklappe 4, wohingegen die Großmengenklappe 6 aufgrund der Federkraft der Blattfeder 14 noch an der Großmengenöffnung 18 anliegt.
Die in Figur 3 gezeigte Kleinmengenöffnungsstellung entspricht auch einer Fail-Safe-Stellung, welche bei Nicht-Bestromung des Elektromotors 30 der Klappenwelle aufgrund der Federkraft der Blattfeder 14 eingenommen wird. Das Getriebe des Antriebsmotors der Klappenwelle ist nicht selbsthemmend. Dadurch ist es in einem Fehlerfall möglich, den Verbrennungsmotor in einem Notbetrieb zu betreiben. Auch ist ein Abfließen von sich auf der Registerklappe 1 gesammelten Kondenswasser möglich, welches sonst im Winter zu einem Einfrieren der Registerklappe führen kann.

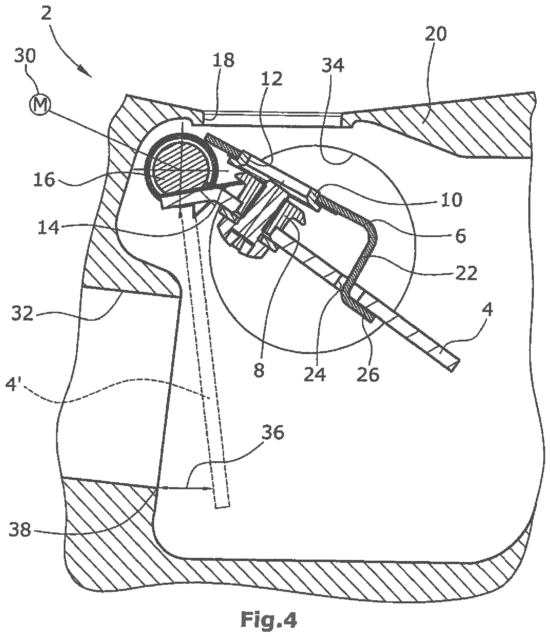

In Figur 4 ist eine Großmengenöffnungssteflung gezeigt, bei welcher die Großmengenklappe 6 von der Großmengenöffnung 18 abgehoben ist. Die Großmengenklappe 6 wird dabei über den Mitnehmer 22, welcher an der Kleinmengenklappe 4 anliegt mitgenommen und folgt der Schwenkbewegung der Klappenwelle 16. Durch Öffnen der Großmengenöffnung 18 ist es möglich in einem Nicht-Volllastbereich eine große Menge Abgas dem Motor rückzuführen.
Figur 4 zeigt zusätzlich eine zweite Fluidöffnung 32 und eine dritte Fluidöffnung 34, welche durch das Ventilgehäuse 20 ausgebildet werden. Diese Fluidöffnungen 32, 34 sind ebenfalls in den Figuren 2 und 3 vorhanden, sind jedoch aus Gründen der Übersichtlichkeit weggelassen worden. In einer vollständig geöffneten Stellung der Kleinmengenklappe 4' weist die Kleinmengenklappe 4'einen Abstand 36 zu einem Öffnungsrand 38 auf. In dieser Stellung verdeckt die Kleinmengenklappe 4'die zweite Fluidöffnung 32 fast vollständig, so dass ein durch die zweite Fluidöffnung 32 tretendes Fluid gedrosselt wird. Der Abstand 36 ist kleiner als 15 mm.

### Bezugszeichenliste

- 1: Registerklappe
- 2: Drei-Wege-Abgasrückführungs-Ventilanordnung
- 4: Kleinmengenklappe
- 4': vollständig geöffnete Kleinmengenklappe
- 6: Großmengenklappe
- 8: Ventilkegel
- 10: Ventilsitz
- 12: Kleinmengenöffnung
- 14: Blattfeder
- 16: Klappenwelle
- 18: Großmengenöffnung
- 20: Ventilgehäuse
- 22: Mitnehmer
- 24: Mitnehmeröffnung
- 26: Schenkel
- 28: Spalt
- 30: Elektromotor
- 32: zweite Fluidöffnung
- 34: dritte Fluidöffnung
- 36: Abstand
- 38: Öffnungsrand

## Patentansprüche

1. Drei-Wege-Abgasrückführungs-Ventilanordnung (2) mit drei Fluidöffnungen (18, 32, 34) für eine Abgasrückführung einer Verbrennungskraftmaschine, wobei die Ventilanordnung umfasst:
- ein Ventilgehäuse (20), welches die erste Fluidöffnung (18), die zweite Fluidöffnung (32) und die dritte Fluidöffnung (34) ausbildet,
- eine die erste Fluidöffnung (18) bildende Großmengenöffnung (18),
- eine Registerklappe (1) die aufweist:
- eine Kleinmengenklappe (4), die einen Schließkörper (8) aufweist,
- eine Großmengenklappe (6) zum Verschließen der Großmengenöffnung (18), wobei die Großmengenklappe (6) eine durch den Schließkörper (8) verschließbare Kleinmengenöffnung (12) aufweist und wobei die Kleinmengenklappe (4) mittels eines Verbindungselementes bewegbar mit der Großmengenklappe (6) verbunden ist, und
- einen Mitnehmer (22), welcher den Öffnungsgrad der Großmengenklappe (6) zur Kleinmengenklappe (4) begrenzt, und
- eine Klappenwelle (16), welche die Klappen (4, 6) trägt, wobei die Klappenwelle (16) stufenlos verstellbar ist zwischen:
- einer Schließstellung, bei welcher die Großmengenklappe (6) die Großmengenöffnung (18) verschließt und der Schließkörper (8) die Kleinmengenöffnung (12) verschließt,
- einer Kleinmengenöffnungsstellung, bei welcher der Schließkörper (8) bei an der Großmengenöffnung (18) anliegender Großmengenklappe (6) beabstandet zu der Kleinmengenöffnung (12) ist, und
- einer Großmengenöffnungsstellung, bei welcher mittels des Mitnehmers (22) die Großmengenklappe (6) von der Großmengenöffnung (18) abgehoben ist.

2. Drei-Wege-Abgasrückführungs-Ventilanordnung (2) nach Anspruch 1, wobei in einer vollständig geöffneten Stellung der Kleinmengenklappe (4') die zweite Öffnung (32) mindestens drosselnd durch die Kleinmengenklappe (4') versperrt ist.

3. Drei-Wege-Abgasrückführungs-Ventilanordnung (2) nach Anspruch 2, wobei in einer vollständig geöffneten Stellung der Kleinmengenklappe (4') die Kleinmengenklappe (4') von der zweiten Öffnung (32) höchstens 15 mm und bevorzugt höchstens 10 mm beabstandet ist.

4. Drei-Wege-Abgasrückführungs-Ventilanordnung (2) nach einem der vorherigen Ansprüche, wobei der Mitnehmer (22) an der Großmengenklappe (6) vorgesehen ist.

5. Drei-Wege-Abgasrückführungs-Ventilanordnung (2) nach den Ansprüchen 1 bis 3, wobei der Mitnehmer (22) an der Kleinmengenklappe (4) vorgesehen ist.

6. Drei-Wege-Abgasrückführungs-Ventilanordnung (2) nach einem der vorherigen Ansprüche, wobei die Großmengenklappe (6) einseitig an der Großmengenöffnung (18) angeschlagen ist.

7. Drei-Wege-Abgasrückführungs-Ventilanordnung (2) nach einem der vorherigen Ansprüche, wobei die Kleinmengenöffnung (12) einen Ventilsitz (10) für den Schließkörper (8) ausbildet.

8. Drei-Wege-Abgasrückführungs-Ventilanordnung (2) nach Anspruch 7, wobei der Ventilsitz (10) als integraler Teil der Großmengenklappe (6) vorgesehen ist.

9. Drei-Wege-Abgasrückführungs-Ventilanordnung (2) nach Anspruch 7, wobei der Ventilsitz (10) als separates Teil der Großmengenklappe (6) vorgesehen ist.

10. Drei-Wege-Abgasrückführungs-Ventilanordnung (2) nach den Ansprüchen 7 bis 9, wobei der Schließkörper ein Ventilkegel (8) ist.

11. Drei-Wege-Abgasrückführungs-Ventilanordnung (2) nach einem der vorherigen Ansprüche, wobei das Verbindungselement eine Feder ist.

12. Drei-Wege-Abgasrückführungs-Ventilanordnung (2) nach Anspruch 11, wobei die Feder eine Blattfeder (14) ist.

13. Drei-Wege-Abgasrückführungs-Ventilanordnung (2) nach Anspruch 11, wobei die Feder eine Spiralfeder ist.

14. Drei-Wege-Abgasrückführungs-Ventilanordnung (2) nach einem der vorherigen Ansprüche, wobei die Klappenwelle (16) über einen Elektromotor (30) angetrieben ist.

## Claims

1. Three-way exhaust gas recirculation valve arrangement (2) comprising three fluid openings (18, 32, 34) for the exhaust gas recirculation of an internal combustion engine, the valve arrangement comprising:
- a valve housing (20) forming the first fluid opening (18), the second fluid opening (32) and the third fluid opening (34),
- a large-volume opening (18) forming the first fluid opening (18),
- a register flap (I) comprising:
- a small-volume flap (4) comprising a closing body (8),
- a large-volume flap (6) for closing the large-volume opening (18), the large-volume flap (6) comprising a small-volume opening (12) adapted to be closed by the closing body (8), and the small-volume flap (4) being movably connected with the large-volume flap (6) by means of a connecting element, and
- a tappet (22) limiting the degree of opening of the large-volume flap (6) to the small-volume flap (4), and
- a flap shaft (16) carrying the flaps (4, 6), the flap shaft (16) being continuously movable between:
- a closed position in which the large-volume flap (6) closes the large-volume opening (18) and the closing body (8) closes the small-volume opening (12),
- a small-volume opening position in which the closing body (8) is spaced from the small-volume flap (12) when the large-volume opening (18) abuts on the small-volume opening (12), and
- a large-volume opening position in which the large-volume flap (6) is lifted from the large-volume opening (18) by means of the tappet (22).

2. Three-way exhaust gas recirculation valve arrangement (2) of claim 1, wherein in a fully open position of the small-volume flap (4'), the second opening (32) is blocked at least in a throttling manner by the small-volume flap (4').

3. Three-way exhaust gas recirculation valve arrangement (2) of claim 2, wherein in a fully open position of the small-volume flap (4'), the small-volume flap (4') is spaced not more than 15 mm and preferably not more than 10 mm from the second opening (32).

4. Three-way exhaust gas recirculation valve arrangement (2) of one of the preceding claims, wherein the tappet (22) is provided on the high-volume flap (6).

5. Three-way exhaust gas recirculation valve arrangement (2) of claims 1 to 3, in which the tappet (22) is provided on the small-volume flap (4).

6. Three-way exhaust gas recirculation valve arrangement (2) of one of the preceding claims, wherein the large-volume flap (6) is hinged to one side of the large-volume opening (18).

7. Three-way exhaust gas recirculation valve arrangement (2) of one of the preceding claims, wherein the small-volume opening (12) forms a valve seat (10) for the closing body (8).

8. Three-way exhaust gas recirculation valve arrangement (2) of claim 7, wherein the valve seat (10) is provided as an integral part of the high-volume flap (6).

9. Three-way exhaust gas recirculation valve arrangement (2) of claim 7, wherein the valve seat (10) is provided as a separate part of the high-volume flap (6).

10. Three-way exhaust gas recirculation valve arrangement (2) of claims 7 to 9, wherein the closing body is a valve plug (8).

11. Three-way exhaust gas recirculation valve arrangement (2) of one of the preceding claims, wherein the connecting element is a spring.

12. Three-way exhaust gas recirculation valve arrangement (2) of claim 11, wherein the spring is a leaf spring (14).

13. Three-way exhaust gas recirculation valve assembly (2) of claim 11, wherein the spring is a coil spring.

14. Three-way exhaust gas recirculation valve arrangement (2) of one of the preceding claims, wherein the flap shaft (16) is driven via an electric motor (30).

## Revendications

1. Ensemble de soupape de recirculation des gaz d'échappement à trois voies (2) comportant trois ouvertures de fluide (18, 32, 34) pour la recirculation des gaz d'échappement d'un moteur à combustion interne, l'ensemble de soupape comportant:
- un carter de vanne (20) formant la première ouverture de fluide (18), la deuxième ouverture de fluide (32) et la troisième ouverture de fluide (34),
- une ouverture pour les grand volumes (18) formant la première ouverture de fluide (18),
- un clapet de registre (1) comportant:
- un clapet pour les petits volumes (4) comportant un corps de fermeture (8),
- un clapet pour les grands volumes (6) pour fermer l'ouverture pour les grands volumes (18), le clapet pour les grands volumes (6) comportant une ouverture pour les petits volumes (12) pouvant être fermée par le corps de fermeture (8), et le clapet pour les petits volumes (4) étant connecté de manière mobile avec le clapet pour les grands volumes (6) par un élément de liaison, et
- un entraineur (22) limitant le degré d'ouverture du clapet pour les grands volumes (6) par rapport au clapet pour les petits volumes (4), et
- un arbre de clapet (16) portant les clapets (4, 6), l'arbre de clapet (16) étant réglable en continu entre:
- une position fermée dans laquelle le clapet pour les grands volumes (6) ferme l'ouverture pour les grands volumes (18) et le corps de fermeture (8) ferme l'ouverture pour les petits volumes (12),
- une position d'ouverture pour les petits volumes, dans laquelle le corps de fermeture (8) est à distance de l'ouverture pour les petits volumes (12) avec le clapet pour les grands volumes (6) reposant sur l'ouverture pour les grands volumes (18), et
- une position d'ouverture pour les grands volumes dans laquelle le clapet pour les grands volumes (6) est soulevé de l'ouverture pour les grands volumes (18) au moyen de l'entraineur (22).

2. Ensemble de soupape de recirculation des gaz d'échappement à trois voies (2) selon la revendication 1, dans lequel, dans une position complètement ouverte du clapet pour les petits volumes (4'), la deuxième ouverture (32) est obturée au moins de manière étranglée par le clapet pour les petits volumes (4').

3. Ensemble de soupape de recirculation des gaz d'échappement à trois voies (2) selon la revendication 2, dans lequel, dans une position complètement ouverte du clapet pour les petits volumes (4'), le clapet pour les petits volumes (4') est éloigné d'au plus 15 mm et de préférence d'au plus 10 mm de la deuxième ouverture (32).

4. Ensemble de soupape de recirculation des gaz d'échappement à trois voies (2) selon l'une quelconque des revendications précédentes, dans lequel le dispositif d'entrainement (22) est prévu sur le clapet pour les grands volumes (6).

5. Ensemble de soupape de recirculation des gaz d'échappement à trois voies (2) selon les revendications 1 à 3, dans lequel l'entraineur (22) est prévu sur le clapet pour les petits volumes (4).

6. Ensemble de soupape de recirculation des gaz d'échappement à trois voies (2) selon l'une quelconque des revendications précédentes, dans lequel le clapet pour les grands volumes (6) est articulé sur un côté de l'ouverture pour les grands volumes (18).

7. Ensemble de soupape de recirculation des gaz d'échappement à trois voies (2) selon l'une des revendications précédentes, dans lequel l'ouverture de petite quantité (12) forme un siège de soupape (10) pour le corps de fermeture (8).

8. Ensemble de soupape de recirculation des gaz d'échappement à trois voies (2) selon la revendication 7, dans lequel le siège de soupape (10) fait partie intégrante du clapet pour les grands volumes (6).

9. Ensemble de soupape de recirculation des gaz d'échappement à trois voies (2) selon la revendication 7, dans lequel le siège de soupape (10) fait une partie séparée du clapet pour les grands volumes (6).

10. Ensemble de soupape de recirculation des gaz d'échappement à trois voies (2) selon les revendications 7 à 9, dans lequel le corps de fermeture est une tige de vanne (8).

11. Ensemble de soupape de recirculation des gaz d'échappement à trois voies (2) selon l'une quelconque des revendications précédentes, dans lequel l'élément de liaison est un ressort.

12. Ensemble de soupape de recirculation des gaz d'échappement à trois voies (2) selon la revendication 11, dans lequel le ressort est un ressort à lame (14).

13. Ensemble de soupape de recirculation des gaz d'échappement à trois voies (2) selon la revendication 11, dans lequel le ressort est un ressort hélicoïdal.

14. Ensemble de soupape de recirculation des gaz d'échappement à trois voies (2) selon l'une quelconque des revendications précédentes, dans lequel l'arbre de clapet (16) est entrainé par un moteur électrique (30).
